# EUROPÄISCHE PATENTSCHRIFT

(11) **EP 2 735 350 B1**
(45) Veröffentlichungstag und Bekanntmachung des Hinweises auf die Patenterteilung: **26.04.2017**
(21) Anmeldenummer: 14155598.7
(22) Anmeldetag: 18.01.2011
(51) Int. Cl.: B01D 39/16, D01D 5/00, D01F 6/74, D04H 1/54, D04H 1/728, D04H 1/4326, B32B 5/26

(54) **P84-Nanofasern, Nanofaservliese und Filtermedium zur Staub-Gas-Abtrennung**
P84-nanofibre, nanofibrous nonwoven and filter medium for the separation of particulates from gases
Nanofibre en P84, non-tissé nanofibreux et element filtrant pour la separation gaz-poussière

(30) Priorität: 28.09.2010 EP 10180876
(43) Veröffentlichungstag der Anmeldung: 28.05.2014
(62) Teilanmeldung aus: 11151206.7
(73) Patentinhaber: Evonik Fibres GmbH, 4861 Schörfling am Attersee (AT)
(72) Erfinder: Pedersen, Andreas, 27383 Scheeßel (DE); Schultheis, Friedel, 63594 Hasselroth (DE); Griesser, Herbert, 4840 Vöcklabruck (AT); Ungerank, Markus, 4320 Perg (AT)
(74) Vertreter: Wolf, Oliver

(56) Entgegenhaltungen:
- EP-A1- 2 037 029
- WO-A1-2008/054104
- US-A1- 2002 100 725
- LI Y ET AL: "Dual-layer polyethersulfone (PES)/BTDA-TDI/MDI co-polyimide (P84) hollow fiber membranes with a submicron PES-zeolite beta mixed matrix dense-selective layer for gas separation", JOURNAL OF MEMBRANE SCIENCE, ELSEVIER SCIENTIFIC PUBL.COMPANY. AMSTERDAM, NL, Bd. 277, Nr. 1-2, 1. Juni 2006 (2006-06-01), Seiten 28-37, XP024931564, ISSN: 0376-7388, DOI: 10.1016/J.MEMSCI.2005.10.008 [gefunden am 2006-06-01]
- MERA H ET AL: "HIGH-PERFORMANCE FIBERS", 1. Januar 1989 (1989-01-01), ULLMANN'S ENCYCLOPEDIA OF INDUSTRIAL CHEMISTRY. HIGH PERFORMANCE FIBERS TO IMIDAZOLE AND DERIVATIVES; [ULLMANN'S ENCYCLOPEDIA OF INDUSTRIAL CHEMISTRY], WEINHEIM, VCH VERLAG, DE, PAGE(S) 1 - 23, XP000566957, * Absatz [2.3.2] *

## Beschreibung

### Gebiet der Erfindung

Staubabscheider, wie z.B. Taschen- oder Schlauchfilter bzw. Filterkerzen oder Zyklone, haben seit mehreren Jahrzehnten ihren festen Platz in der industriellen Entstaubung von Abgasen, bevor diese in nachfolgenden Prozessen eingesetzt werden oder in die Atmosphäre freigesetzt werden.

Aus der Vielfalt von Staubabscheidern, die für Staub-Gas-Trennverfahren zur Auswahl stehen, hat sich der Schlauchfilter aufgrund seiner guten Separationseffizienz für die Abscheidung von Feststoffen aus Abgasen mit höheren Staubbeladung seit Jahrzehnten in verschiedensten industriellen Anwendungen bewährt. Dabei ist die prinzipielle Funktionsweise der Schlauchfilter gleich geblieben: Auf seinem Weg durch eine Filteranlage wird das staubbeladene Gas (,Rohgas') durch ein Filtermedium geleitet und in seine Bestandteile (Staub und 'Reingas') getrennt. Nach Erreichen eines bestimmten Differenzdrucks oder nach Ablauf eines voreingestellten Zeitintervalls muss der Filterschlauch gereinigt (,regeneriert') werden. Hierfür stehen unterschiedliche Abreinigungsverfahren zur Auswahl, wobei eine effiziente Form der Abreinigung der Pulse-Jet ist, der sich inzwischen weitgehend als Standard-Abreinigungsverfahren für Schlauchfilteranwendungen durchgesetzt hat. Bei der Pulse-Jet-Abreinigung wird ein intensiver Druckstoß eines komprimierten Gases (Puls) entgegen der Abgas-Strömungsrichtung freigesetzt. Demzufolge wird der Filterschlauch kurz aufgebläht, der Filterkuchen durch Impulsübertragung vom Filtermedium abgelöst und die Strömungsrichtung kurzfristig umgekehrt. Diese Abreinigung wird in den meisten Fällen on-line, also ohne Unterbrechung des Entstaubungsprozesses, durchgeführt. Zur Unterstützung der Abreinigung können die Schläuche während der Abreinigung zusätzlich gerüttelt werden. In dieser bisherigen Beschreibung der Schlauchfilter wurden die Eigenschaften des Filtermediums selbst nicht in Betracht gezogen, wobei diesen bei der Auslegung eine besondere Bedeutung zukommt.

Für Hochtemperatur-Filtrationsapplikationen (bis 260°C), die mit mechanisch, thermisch und chemisch stabilen Filtermedien ausgestattet sind, ist die Auswahl von Filtermediummaterialien generell auf Polytetrafluorethylen-(PTFE), Aramid-, Glassfasern- und Polyimid-Textilien beschränkt. Kommt dazu, die Anforderung an das Filtermedium auch sehr feinkörnige Staubpartikel (submikrone Stäube) bei hohem Trenngrade entfernen zu müssen, ist der Einsatz eines einfachen Gewebes oder Nadelfilzes aus den obengenannten Materialien oft nicht ausreichend, um hohe Trenngrade zu gewährleisten. Stattdessen kann ein textiles Trägermaterial (Substrat) an der Anströmseite z.B. mit einer PTFE-Membran oder einem Nanofaservlies (Feinstrukturlage) ausgerüstet werden. Durch diese Beschichtung des Substrats an der Anströmseite steigt die Filtrationsleistung des Mediums an und feinkörnigere Partikeln werden abgeschieden. Bedingt durch das Pulse-Jet-Abreinigungsverfahren ist eine starke Haftung zwischen Substrat und Feinstrukturlage (Adhesion) jedoch notwendig, da sich sonst die Feinstrukturlage vom Substrat ablösen kann, wodurch sich die Filtrationseigenschaften hinsichtlich der Abscheidung submikroner Stäube verschlechtern würden.

Die folgende Erfindung ist auf den Einsatz einer auf einem Substrat aufgebrachten Feinstrukturlage aus dem Material Polyimid (hergestellt und vertrieben von Evonik Fibres unter der Marke P84^{®}) für den Einsatz in Hochtemperatur-Entstaubungsapplikationen gerichtet.

### Stand der Technik

DE 699 13 969 (3M) betrifft ein Verfahren zur Herstellung von porösem kalzinierten Polyimid. Die Porosität des Kunststoffformkörpers ermöglicht es, durch Dotierung die physikalischen Eigenschaften des Kunststoffformkörpers, die Dielektrizitätskonstante anzupassen. Die Poren werden durch thermische Zersetzung von Polyethylenglycol erzeugt.

DE 697 28 384 (Teijin) beschreibt eine Zusammensetzung, die ein nichtkristallines Polyimid und einen aromatischen Polyester umfasst. Das Polyimid dient zur Verbesserung der Eigenschaften des Polyesters wie beispielsweise der Formbarkeit und Gasdichtigkeit.

US-PS 5,773,559 (Japan Synthetic Rubber Co.) beschreibt die Herstellung eines Blockcopolymers aus zwei unterschiedlichen Polyamidcarbonsäure-Einheiten, wobei die erste Polyamidcarbonsäure-Einheit aus einer Tetracarbonsäure sowie einem Diamin gebildet wird und die erste Polyamidcarbonsäure-Einheit freie Aminoendgruppen aufweist, und die zweite Polyamidcarbonsäure-Einheit ebenfalls aus einer Tetracarbonsäure und einem Diamin gebildet wird und die zweite Polyamidcarbonsäure-Einheit freie Carbonsäureendgruppen aufweist, diese beiden unterschiedlichen Polyamidcarbonsäure-Einheiten werden zum Polyamidcarbonsäure-Blockcopolymer umgesetzt. Nach der Imidisierung erhält man ein Polyimid-Blockcopolymer. Das Verfahren kann auch analog mit Polyimid-Blockcopolymeren durchgeführt werden und führt dann ohne zusätzlichen Imidierungsschritt zum Polyimid-Blockcopolymer. Das Verfahren kann ferner mit Diisocyanaten als verkappten Aminen durchgeführt werden, ebenso kann das Verfahren mit Polyamiden und Polyimiden durchgeführt werden. Die erhältlichen Blockcopolymere werden in Flüssigkristallformulierungen eingesetzt.

Hochtemperaturpolyimide (Erweichungspunkt > 300°C) sind als Pulver bzw. Formteile im Handel erhältlich. Die Produkte Vespel^{®} von DuPont, Meldin^{®} 7000 von Saint Gobain, Plavis^{®} von Daelim und Upimol^{®} von UBE sind nur als Formteile am Markt erhältlich, während das Produkt P84^{®} von Evonik Fibers als Pulver verkauft wird. Aus diesem Pulver stellt die Firma Ensinger Sintimid Formteile mit dem Markennamen SINTIMID^{®} her. Die drei erstgenannten Produkte sind chemisch ident; sie werden aus Pyromellitsäuredianhydrid und 4,4'-Diaminodiphenylether hergestellt. Upimol^{®} wird hergestellt aus Biphenyltetracarbonsäuredianhydrid und Diaminodiphenylether. P84^{®} unterscheidet sich in seiner Zusammensetzung von den drei erstgenannten und weist einen Erweichungspunkt auf. Aufgrund der hohen Viskosität über dem Glaspunkt ist jedoch nur eine Verarbeitung nach dem Hot-compression-molding Verfahren möglich; Spritzguss und Extrusion sind nicht möglich.
Der Stand der Technik zur Pulse-Jet Filtration wird beispielweise in Chemical Engineering 112 (2) pp. 42-49, 2005 (Amrit T. Agarwal), in CIT Plus 10 (7) pp. 42-43, 2007 (Jochen Wittkamp) und in ZKG International 59 (10) pp. 82-87, 2006 (Frank Marmor) zusammengefasst.

Der Stand der Technik zur Lamination wird im Journal of Mechanical Engineering 52 (9) pp. 613-624, 2006 (Darko Drev) beschrieben.

### Aufgabe

Es bestand die Aufgabe, ein neuartiges Filtermedium auf der Basis von P84^{®}-Nanofasern für Pulse-Jet-Heißgasfiltrationsapplikationen zu entwickeln. Hierbei stand nicht nur die Produktentwicklung im Vordergrund, sondern auch die Entwicklung der Prozesse, mit denen das Filtermedium im Produktionsmaßstab hergestellt werden kann.

Die Hauptaufgaben waren:
- Entwicklung eines Produktionsverfahrens für die Herstellung von Nanofasern bzw. Nanofaservliesen auf der Basis von P84^{®}.
- Entwicklung eines geeigneten Elektrospinnverfahrens auf industrieller Skala für die Herstellung von Nanofasern.
- Entwicklung und Herstellung einer geeigneten Rezeptur für die Spinnlösung, aus der die Nanofasern hergestellt werden.
- Entwicklung einer geeigneten Kleberrezeptur inkl. eines Auftragungsverfahrens, um die Nanofasern auf dem Substrat zu fixieren (Adhesion).
- Entwicklung eines geeigneten Verfahrens, mit dem die interne Haftung zwischen den einzelnen Nanofasern im Nanofaservlies erhöht werden kann (Kohäsion), wodurch die mechanische Stabilität des Nanofaservlieses erhöht und eine Anwendung in Pulse-Jet-Applikationen ermöglicht wird.
- Die Filtrationseigenschaften der Nanofaservliese zu optimieren (Zykluszeit, Restdruckverhalten, Form der Differenzdruckkurve, Staubemission und Staubeinlagerung) und mit schon bestehenden, auf dem Markt verfügbaren Pulse-Jet-Hochtemperaturfiltermedien zu vergleichen.
- Geeignete Substrate zur Verbesserung der mechanische Stabilität des Filtermediums zu identifizieren.

### Lösung

### Die Nanofaser

Als Nanofasern werden P84^{®}-Polyimidfasern verwendet. Die Nanofasern werden durch einen Elektrospinn-Prozeß gewonnen und haben einen Durchmesser von 5 nm bis 1.000 nm, bevorzugt von 10 nm bis 750 nm und ganz besonders bevorzugt von 20 nm bis 550 nm. Der Durchmesser der Nanofasern wird mittels REM-Aufnahmen bei einem Vergrößerungsfaktor von 5.000x gemessen. Bei diesem Verfahren ist besonders darauf zu achten, dass nur Fasern, die sich in der bildlichen Darstellung an der Oberfläche des Untersuchungsobjektes befinden, beurteilt werden.

Das verwendete Polyimid wird von Evonik Fibres in den Handel gebracht und wird durch Umsetzung von aromatischen Dianhydriden mit aromatischen Diisocyanaten hergestellt.

### Das Herstellungsverfahren der Nanofasern

Die erfindungsgemäß zu verwendenden Nanofasern werden durch einen Elektrospinn-Prozeß hergestellt. Die wesentlichen Elemente des Prozesses sind:
- Herstellung der Elektrospinn-Lösung.
- Verspinnen der Lösung im elektrischen Feld unter definierten Bedingungen.
- Auffangen der gebildeten Nanofasern.

In einem typischen Aufbau einer Elektrospinnanlage wird die zu verspinnende Polymerlösung tropfenweise an einer Elektrode dosiert und durch das elektrische Feld mit typischen Feldstärken von ca. 1.000 bis 2.000 V/cm von der Elektrode abgezogen und beschleunigt, wobei in einigen Fällen auch Feldstärken bis zu 4.000 V/cm verwendet werden. Sobald die elektrische Krafteinwirkung die Viskosität und Oberflächenspannung der Tropfen überwindet, bildet sich ein Jet in Richtung der Gegenelektrode aus, das Lösungsmittel verdampft und die Fasern werden schließlich auf der Gegenelektrode abgelagert. Als Dosiersystem kann z.B. eine Labor-Dosierspritze verwendet werden. Hierbei wird die zu verspinnende Lösung in die Spritze eingefüllt und die Kanüle unter Spannung gesetzt. Durch eine kontinuierliche und konstante Dosierung bildet sich an der Öffnung der Kanüle ein Tropfen, aus welchem sich die Nanofasern bei

Erreichen einer gewissen elektrischen Feldstärke abziehen lassen. Als Gegenelektrode kann z.B. eine höhenverstellbare, stabile und elektrisch leitende Unterlage verwendet werden. Hierbei ist darauf zu achten, dass es auch möglich sein muss diese Gegenelektrode entweder zu erden oder unter Spannung zu setzen. Auf der Gegenelektrode bildet sich dann ein Vlies bestehend aus Nanofasern.

Beim Elektrospinnen von Polymerlösungen, und besonders bei P84^{®}-Lösungen, ist generell darauf zu achten, dass Faktoren wie die Spannung, Luftfeuchte, Polymerkonzentration, Abstand der Elektroden, die Strömungsverhältnisse in der Spinnkabine und die Verwendung eines Tensids einen großen Einfluss auf den Elektrospinnprozess sowie die Eigenschaften der hergestellten Nanofasern haben.

Zur Erhöhung der Kohäsion kann sich gegebenenfalls eine thermische Nachbehandlung des Nanofaservlies (z.B. kalandrieren) bei 280 bis 350°C für 1 bis 30 min anschließen.

### Herstellung der Elektrospinnlösung

Das P84^{®}-Polymer wird beispielsweise in Dimethylformamid (DMF) oder einem anderen polaren aprotischen Lösungsmittel gelöst.
Als Lösungsmittel können Harnstoffe wie z.B. N,N-Dimethyltetrahydropyropyrimidinon, Sulfolan, N,N,-Dimethylformamid, N,N,-Dimethylacetamid, N-Methylpyrrolidon, N-Ethylpyrrolidon und Dimethylsulfoxid verwendet werden. Ferner besteht die Möglichkeit, andere Lösungsmittel mit bis zu 60 m-% bis 80 m-% Konzentration dazuzumischen ohne dass das Polymer ausfällt. Mögliche Lösungsmittel hier sind Tetrahydrofuran, 1,4-Dioxan, Toluol, Xylol, Aceton, Butanon und Alkohole (≤ 10 Gew.-%).

Die Konzentration an P84^{®}-Polymer in der Lösung beträgt zwischen 5 m-% und 25 m-%, bevorzugt zwischen 10 m-% und 20 m-% und ganz besonders bevorzugt zwischen 12,5 m-% und 20 m-%.

Die Lösung umfasst ferner Natriumdodecylsulfat als Tensid.

Die Konzentration an Tensid beträgt zwischen 15 m-% und 0,01 m-%, bevorzugt zwischen 12 m-% und 0,75 m-% und ganz besonders bevorzugt zwischen 2,5 m-% und 1 m-%, bezogen auf die Lösung des Polyimids im polaren, aprotischen Lösungsmittel. (m-% bedeutet Massepromille, bezogen auf die Lösung des Polyimids im polaren, aprotischen Lösungsmittel) Der Kleber (Adhesion)
Als Kleber kann man Epoxidkleber, Siliconkleber, Polyimidkleber oder Kleber auf Maleinimid-Basis einsetzen.

Als Silikonkleber können sowohl neutralvernetzende als auch essigsäurevernetzende Kleber eingesetzt werden.

Die Kleber müssen bis zu 260°C temperaturbeständig sein (Grenze der Heisgasfiltrationsanwendung) und ausreichend hohe Haftwerte aufweisen. Der Kleber muss, abhängig von den Einsatzbedingungen, für eine Haftung über wenige Monate bis hin zu mehreren Jahren ohne ein Ablösen des Nanofaservlieses vom Substrat sorgen. Fälle bei denen Pulse-Jet-Filtermedien bis zu 11 Jahren im Einsatz waren liegen vor, aber eine typische Einsatzdauer liegt zwischen zwei und vier Jahren. Über diesen Zeitraum wird das Filtermedium mehreren 10.000 Reinigungspulsen ausgesetzt und auch am Ende der Einsatzzeit muss eine hohe Haftung zwischen Substrat und Nanofaservlies vorhanden sein. Der Pulse-Jet-Reinigungsdruck kann bis zu 6,0 bar betragen und kurzfristig sogar auf bis zu 7,5 bis 8,0 bar erhöht werden. Üblicherweise liegt der Reinigungsdruck jedoch in der Größenordnung von ca. 3,5 bis 4,5 bar, bei Ventilöffnungszeiten von ca. 0,1s bis max. 0,5 s. Diese angegebenen Werte sind jedoch stark abhängig von dem verwendeten System und den Einsatzbedingungen.

### Auftragung des Klebers

Zum Auftragen des Klebstoffes auf die zu fügende Fläche stehen eine Vielzahl von Methoden zur Verfügung, die klebstoffspezifisch ausgewählt werden können, wie beispielsweise:
- Raupenauftrag
- Aufrakeln
- Breitschlitzdüsenauftrag
- Walzenauftrag
- Sprühauftrag
- Spritzauftrag
- Fliessbalken
- Siebdruckauftrag
- Verwirbeln
- Aufschleudern
- Klebfilmapplikation

Die Auftragsmethode muss berührungsfrei sein. Die einzelnen Methoden unterscheiden sich zusätzlich durch die Auftragstemperaturen und durch die zur Anwendung kommenden Drücke. Die rheologischen Eigenschaften der Klebstoffe sind dafür entscheidend.

Eine wichtige Forderung im Fall der Filtervliesverklebung ist die, dass nach dem Verkleben ein Durchströmen des Abgases durch die beiden Filtervliese (Nanofaservlies und Substrat) immer noch gut möglich sein muss. Damit scheiden die meisten Standardauftragsverfahren wie Raupenauftrag mit anschliessendem Verpressen, Filmauftrag etc. aus. Als aussichtsreichste Verfahren sollten zunächst Sprühauftrag, bzw. Verwirbelung oder Siebdruck in die engere Wahl kommen.

Im Fall hochviskoser Klebstoffe, insbesondere bei Schmelzklebstoffen, kommt es nicht zum echten Sprühen mit Tröpfchenbildung, sondern eher zu einem Verwirbeln mit leichter Fadenstruktur, die je nach Auftragsbedingungen (Temperatur, Druck, Düsendesign, Austragsmenge pro Zeit) zu einer non-woven/vlies-ähnlichen Struktur führt.
Damit wäre eine strömungshindernde, flächige Verklebung ausgeschlossen. Die meisten Auftragsgeräte für diese Anwendungsart sind in erster Linie für Schmelzklebstoffauftrag gedacht, doch sind sie auch für höherviskose Klebstoffe/Dichtstoffe bei niedrigeren Temperaturen geeignet. Zu achten ist darauf, dass das Auftragssystem für luftfeuchteaushärtende Produkte geeignet ist (die meisten Schmelzklebstoffe sind nicht reaktiv).

Beim Sprühauftrag des Klebers wird der Silikonkleber in einem Lösungsmittel, beispielsweise in Toluol, gelöst und z.B. mittels einer handelsüblichen Spritzpistole aufgetragen. Die Konzentration des Klebers in der Lösung wird so eingestellt, dass sich eine gut sprühbare Lösung (homogenes Sprühbild, konstante Tropfenverteilung über die zu vernetzende Fläche und Tropfengrößenverteilung) ergibt und beträgt beispielsweise 20 m-%.

Als Klebersysteme kommen beispielsweise Silikonkleber in Frage, wobei die Kleber neutralvernetzend oder essigsäurevernetzend sein können. Als neutralvernetzende Kleber kommen beispielsweise der Kleber Dow Corning^{®} Hi-Temp Silicone Sealant oder WIKOSIL^{®}-HTN in Frage. Als essigsäurevernetzender Kleber kommt beispielsweise der Kleber Dyna-Pro^{®} Fire Resistant Sealant in Frage. Als Epoxidkleber kommt ECCOBOND^{®} 104 A/B und als Polyimidkleber kommt KYOWA^{®} PL32 in Betracht.

Die Spezifikation der Kleber:
- Dehnspannungswert bei 100% (DIN 53504, S3A): 0,2 N/mm² bis 2,0 N/mm².
- Reißdehnung (DIN 43504, S3A): 100 % bis 600 %.
- Zugfestigkeit (DIN 53504, S3A): 0,2 N/mm² bis 4,5 N/mm².
- Temperaturbeständig bis zu einer Dauereinsatztemperatur von 260°C.

Chemische Beständigkeit der Kleber: Dauerbeständigkeit gegen Hydrolyse, saure und basische Umgebungen (pH-Werte 2 bis 12) sowie typische Abgasbestandteile wie z.B. SOₓ, CO, O₂, CO₂ oder NOₓ bei Temperaturen bis 260°C. Unter diesen Bedingungen muss der Kleber über die ganze Einsatzdauer des Pulse-Jet-Filtermediums für eine hohe Haftung zwischen Nanofaservlies und Substrat sorgen. Die zwei Lagen dürfen sich nicht trennen.

### Das Substrat

Das Substrat dient in erster Linie der mechanischen Stabilität des Filtermediums und besteht z.B. aus einem Gewebe oder Nonwoven aus den Materialien Polyimid, Aramid, Glasfasern bzw. Glasfasern beschichtet mit PTFE, Polyphenylensulfid oder PTFE.

Das Substrat verfügt typischerweise über eine Luftdurchlässigkeit von 5 l/hcm² bis 400 l/hcm² bei 2 mbar (ISO 9237), eine Dicke von 0,1 mm bis 5 mm und ein Flächengewicht von 100 g/m² bis 850 g/m².

### Beispiele

### Herstellung der Filtermedien

Die Filtermedien bestehen aus den P84^{®}-Nanofaservlies und dem Substrat. Die Filtermedien werden folgendermaßen hergestellt:
Die P84^{®}-Nanofasern werden nach dem oben beschriebenen Elektrospinn-Prozess als Nanofaservlies hergestellt.

Die Dicke der P84^{®}-Nanofaserschicht beträgt zwischen 20 nm und 1000 nm, bevorzugt zwischen 30 nm und 800 nm und ganz besonders bevorzugt zwischen 50 nm und 700 nm.

Die P84^{®}-Nanofaserschicht wird mittels eines Klebers auf dem Substrat befestigt. Als Kleber wird ECCOBOND^{®} 104 A/B, oder Dow Corning^{®} Hi Temp Silicone Sealant eingesetzt und der Kleber wird mittels Sprühen aufgetragen.

Als Substrat dienen Polyimidfasern, Glasfasern oder PTFE-Fasern. Die Dicke des Filterträgers beträgt zwischen 0,1 mm und 6,0 mm, bevorzugt zwischen 0,2 mm und 4,0 mm und ganz besonders bevorzugt zwischen 0,4 mm und 2,5 mm.

Für die Überprüfung der Filtrationseigenschaften (Zykluszeit, Restdruckverhalten, Form der Differenzdruckkurve, Staubemission und Staubeinlagerung) der P84^{®}-Nanofaservliese wurde ein Prüfstand ähnlich VDI 3926 Typ 2 gebaut. Die Hauptunterschiede zwischen der VDI 3926 Typ 2 Norm und dem gebauten Prüfstand sind die Dimensionen der Roh- und Reingaskanäle, die kleiner sind als in der VDI 3926 Typ 2 beschrieben. Ein weiterer Unterschied ist, dass in dem Reinigungssystem kein Druckbehälter eingebaut wurde. In dem Prüfablauf wurde zusätzlich zu den Filtrationsphasen 1 bis 4 (VDI 3926) eine Phase 5 eingeführt, bei der beim Erreichen eines Differenzdrucks von 1.800 Pa abgereinigt wird und die Prüfdauer zwei Stunden beträgt.

Zusätzlich wurde ein nach VDI 3926 Typ 2 gebauter Prüfstand verwendet. In den Versuchen auf diesem Prüfstand wurde nur Phase 1, wie beschrieben in VDI 3926 für die Überprüfung der Filtrationseingeschaften der Filtermedien herangezogen.

### Ergebnisse:

Ergebnisse der Elektrospinnversuche in Abhängigkeit vom eingesetzten Tensid.

Der Spinnvorgang im Labormaßstab erfolgte aus einer Polymerlösung mit einer Konzentration von 15 m-% Polymer in DMF, die Tensidkonzentration der Polymerlösung betrug 1 m-%. An der Düse lag eine Feldstärke von - 1,76 kV/cm an und auf dem Auffangtisch mit Substrat war die Erdung angeschlossen, die Temperatur im Spinnraum betrug 22°C und die relative Luftfeuchtigkeit lag zwischen 26% und 30 %.

| **Beispiel-Nr.** | **Tensid** | **Faserdurch-messer/[nm]** | **Slip-flow-Effekt vorhanden?** | **Bewertung** |
|---|---|---|---|---|
| Vergleichsbeispiel 1 | Natriumdodecylbenzolsulfonat | 240 - 700 | **Ja** 1.) | Segelbildung und keine Beads; nicht geeignet |
| Vergleichs - beispiel 2 | Ceryltrimethylammoniumbromid | 230 - 575 | **Ja** | Segelbildung und keine Beads; nicht geeignet |
| Vergleichsbeispiel 3 | - ohne Additiv - | 350 - 575 | **Ja** | Segelbildung und keine Beads, der Spinnprozess ist nicht stabil; nicht geeignet |
| Vergleichsbieispiel 4 | Benztriethylammoniumbromid | 245 - 500 | **Ja** | Segelbildung und keine Beads; nicht geeignet |
| Vergleichsbeispiel 5 | Tetrabutylammoniumbromid | 230 - 580 | **Ja** | Segelbildung und keine Beads; nicht geeignet |
| 1 | Natriumdodecylsulfat | 240 - 475 | **Ja** | keine Segelbildung und keine Beads; geeignet |

| | | | | |
|---|---|---|---|---|
| 1.) Der Faserdurchmesser von 700 nm stellt eine seltene Ausnahme dar. | | | | |

Unter "Segelbildung" wird die Bildung eines luftundurchlässigen Polymerfilms zwischen zwei Fasern verstanden.

Unter Beads ist eine Veränderung der idealen Fasermorphologie mit unverändertem Querschnitt durch das Erscheinen von Verdickungen zu verstehen.

### Ergebnisse der Klebeversuche

Die jeweiligen Silikonkleber wurden in Toluol gelöst, die Konzentration der Lösung betrug 20 m-% und die Lösung wurde im Sprühverfahren auf das Substrat aufgetragen.
Epoxid-, Maleinimid- und Polyimidkleber wurden jedenfalls mittels eines Sprühverfahrens auf das Substrat aufgetragen.

| **Beispiel** | **Klebesystem** | **Lieferant** | **Substrat** | **Haftung** | **Bewertung** |
|---|---|---|---|---|---|
| 2 | Silikon, neutralvernetzend, Dow Corning^{®} Hi-Temp Silicone Sealant | Dow Corning | P84^{®}-Gewebe | ja | Kleber geeignet |
| 3 | Silikon, neutralvernetzend, WIKOSIL^{®} HNT | WISABAX | P84^{®}-Gewebe | ja | Kleber geeignet |
| 4 | Silikon, essigsäurevernetzend, Dyna-pro^{®} Fire Resistant Sealant | Saber Industrial | PS4^{®}-Gewebe | ja | Kleber geeignet |
| 5 | Epoxidkleber, ECCOBOND^{®} 104 A/B | Bayer AG | P84^{®}-Gewebe | ja | Kleber geeignet |
| Vergleichsbeispiel I | Maleinimid C-P500 | Evonik Industries | P84^{®}-Gewebe | **nein** | Kleber ist **nicht** geeignet |
| Vergleichsbeispiel II | Polyimidkleber, KYOWA^{®} P132 | KYOWA | P84^{®}-Gewebe | **nein** | Kleber ist **nicht** geeignet |

## Patentansprüche

1. P84 Nanofasern mit einem Durchmesser, ermittelt mittels REM-Aufnahmen, von 5 nm bis 1000 nm, erhältlich durch Elektrospinnen einer Elektrospinnlösung umfassend P84 Polymere.

2. Nanofaservlies umfassend P84 Nanofasern nach Anspruch 1.

3. Nanofaservlies nach Anspruch 2,
**dadurch gekennzeichnet,**
**dass** die P84 Nanofasern einen Durchmesser, ermittelt mittels REM-Aufnahmen, von 10 bis 750 nm, bevorzugt von 20 bis 550nm aufweisen.

4. Nanofaservlies nach einem der Ansprüche 2 oder 3,
**dadurch gekennzeichnet,**
**dass** es nach einem Verfahren erhältlich ist, welches eine thermische Nachbehandlung des Nanofaservlies bei 280 bis 350°C für 1 bis 30 min umfasst.

5. Filtermedium umfassend ein Substrat sowie P84 Nanofasern nach Anspruch 1 und/oder ein Nanofaservlies nach einem der Ansprüche 2 bis 4.

6. Filtermedium nach Anspruch 5,
**dadurch gekennzeichnet,**
**dass** es zusätzlich einen Kleber umfasst, wobei der Kleber einem Dehnspannungswert, gemessen nach DIN 53504, S3A, bei 100% von 0,2 N/mm² bis 2,0 N/mm², einer Reißdehnung, gemessen nach DIN 43504, S3A, von 100 bis 600 %, einer Zugfestigkeit, gemessen nach DIN 53504, S3A, von 0,2 N/mm² bis 4,5 N/mm² und einer Dauertemperaturbeständigkeit von mindestens 260°C.

7. Filtermedium nach Anspruch 6, **dadurch gekennzeichnet, dass** es sich bei dem Kleber um einen Epoxidkleber oder Siliconkleber oder Polyimidkleber oder einen Kleber auf Maleinimid-Basis handelt.

8. Filtermedium nach einem der Ansprüche 6 oder 7,
**dadurch gekennzeichnet,**
**dass** das Nanofaservlies mit Hilfe des Klebers auf der Anströmseite des Substrats angebracht ist.

9. Filtermedium nach einem der Ansprüche 5 bis 8,
**dadurch gekennzeichnet,**
**dass** es erhältlich ist nach einem Verfahren umfassend folgende Schritte:
a. Herstellung des Nanofaservlieses aus einer Lösung mit Hilfe eines Elektrospinnverfahrens und
b. Die Auftragung und Fixierung der in Schritt a. hergestellten Nanofasern auf einem Substrat.

10. Filtermedium nach Anspruch 9, **dadurch gekennzeichnet, dass** Schritt a folgende Teilschritte umfasst:
• Herstellung einer P84 Lösung mit einer Konzentration von 5 m-% bis 25 m-% in einem polaren, aprotischen Lösungsmittel,
• optionaler Zugabe eines Tensids in Konzentrationen von 0,01 m-‰ bis 15 m-‰,
• Elektrospinnen in einem elektrischen Feld der Feldstärke zwischen 1.000 V/cm und 4.000 V/cm.

11. Filtermedium nach Anspruch 10,
**dadurch gekennzeichnet,**
**dass** die elektrospinnbare P84 Lösung in einem aprotischen, polaren Lösungsmittel folgende Zusammensetzung aufweist:
a. die Konzentration des Polyimid beträgt 10 m-% bis 20 m-% (Massenprozent).
b. optionale Zugabe eines Tensids mit einer Massenkonzentration von 0,75 m-‰ bis 12 m-‰ (m-‰ bedeutet Massepromille, bezogen auf a.)

12. Filtermedium nach einem der Ansprüche 5 bis 11,
**dadurch gekennzeichnet,**
**dass** es ein Substrat aus einem Material, ausgewählt aus der Gruppe bestehend aus Polyimid, Aramid, Glasfaser, PTFE oder Polyphenylensulfid bzw. Kombinationen hiervon umfasst.

13. Filtermedium nach einem der Ansprüche 5 bis 12,
**dadurch gekennzeichnet,**
**dass** das Substrat entweder ein Gewebe oder ein Nonwoven ist
und/oder
**dass** das Substrat eine Luftdurchlässigkeit, gemessen nach ISO 9237, von 5 bis 400 l/hcm², einer Dicke von 0,1 bis 5 mm und einem Flächengewicht von 100 bis 850 g/m² aufweist.

14. Verwendung von Nanofasern nach Anspruch 1 oder von Nanofaservliesen nach einem der Ansprüche 2 bis 4 oder von Filtermedien nach einem des Ansprüche 5 bis 13 zur Staub-Gas-Abtrennung in einer Heißgasfiltration, bevorzugt in einer Puls-Jet-Filtration.

## Claims

1. P84 nanofibres having a diameter as determined by SEM micrographs of 5 nm to 1000 nm, obtainable by electrospinning an electrospinning solution comprising P84 polymers.

2. Nanofibre nonwoven comprising P84 nanofibres according to Claim 1.

3. Nanofibre nonwoven according to Claim 2, **characterized in that** the P84 nanofibres have a diameter as determined by SEM micrographs of 10 to 750 nm, preferably of 20 to 550 nm.

4. Nanofibre nonwoven according to either of Claims 2 and 3,
**characterized in that** it is obtainable by a method which includes thermal aftertreatment of the nanofibre nonwoven at 280 to 350°C for 1 to 30 min.

5. Filter medium comprising a substrate and also P84 nanofibres according to Claim 1 and/or a nanofibre nonwoven according to any of Claims 2 to 4.

6. Filter medium according to Claim 5,
**characterized in that** it further comprises an adhesive, the adhesive having an elongation stress value, measured according to DIN 53504, S3A, at 100% of 0.2 N/mm² to 2.0 N/mm², an elongation at break, measured according to DIN 43504, S3A of 100% to 600%, a tensile strength, measured according to DIN 53504, S3A, of 0.2 N/mm² to 4.5 N/mm², and a long-term thermal stability of at least 260°C.

7. Filter medium according to Claim 6,
**characterized in that** the adhesive is an epoxy adhesive or silicone adhesive or polyimide adhesive or maleimide-based adhesive.

8. Filter medium according to either of Claims 6 and 7,
**characterized in that** the nanofibre nonwoven is positioned using the adhesive on the inflow side of the substrate.

9. Filter medium according to any of Claims 5 to 8, **characterized in that** it is obtainable by a method comprising the following steps:
a. producing the nanofibre nonwoven from a solution by means of an electrospinning process, and
b. applying and fixing the nanofibres produced in step a. on a substrate.

10. Filter medium according to Claim 9,
**characterized in that** step a. comprises the following sub-steps:
• producing a P84 solution having a concentration of 5 m% to 25 m% in a polar, aprotic solvent,
• optionally adding a surfactant at concentrations of 0.01 m‰ to 15 m‰,
• electrospinning in an electrical field with a field strength of between 1000 V/cm and 4000 V/cm.

11. Filter medium according to Claim 10,
**characterized in that** the electrospinnable P84 solution in an aprotic, polar solvent has the following composition:
a. the concentration of the polyimide is 10 m% to 20 m% (per cent by mass);
b. optionally adding a surfactant having a concentration by mass of 0.75 m‰ to 12 m‰ (m‰ denotes parts by mass per thousand, based on a.).

12. Filter medium according to any of Claims 5 to 11, **characterized in that** it comprises a substrate composed of a material selected from the group consisting of polyimide, aramid, glass fibre, PTFE or polyphenylene sulphide and/or combinations thereof.

13. Filter medium according to any of Claims 5 to 12, **characterized in that** the substrate is either a woven or a nonwoven fabric
and/or
**in that** the substrate has an air permeability as measured according to ISO 9237 of 5 to 400 l/hcm², a thickness of 0.1 to 5 mm and a basis weight of 100 to 850 g/m².

14. Use of nanofibres according to Claim 1 or of nanofibre nonwovens according to any of Claims 2 to 4 or of filter media according to any of Claims 5 to 13 for dust/gas separation in a hot gas filtration process, preferably in a pulse jet filtration process.

## Revendications

1. Nanofibres à base de P84, ayant un diamètre, déterminé au moyen de photographies au MEB, de 5 nm à 1 000 nm, pouvant être obtenues par électrofilage d'une solution d'électrofilage comprenant des polymères P84.

2. Non-tissé de nanofibres comprenant des nanofibres à base de P84 selon la revendication 1.

3. Non-tissé de nanofibres selon la revendication 2,
**caractérisé en ce que**
les nanofibres à base de P84 présentent un diamètre, déterminé au moyen de photographies au MEB, de 10 à 750 nm, de préférence de 20 à 550 nm.

4. Non-tissé de nanofibres selon l'une quelconque des revendications 2 et 3,
**caractérisé en ce**
**qu'**il peut être obtenu selon un procédé qui comprend un post-traitement thermique du non-tissé de nanofibres à une température de 280 à 350 °C pendant 1 à 30 min.

5. Milieu filtrant comprenant un support ainsi que des nanofibres à base de P84 selon la revendication 1 et/ou un non-tissé de nanofibres selon l'une quelconque des revendications 2 à 4.

6. Milieu filtrant selon la revendication 5, **caractérisé en ce**
**qu'**il comprend en outre un adhésif, l'adhésif présentant une valeur de la tension d'allongement, mesurée selon DIN 53504, S3A, à 100 %, de 0,2 N/mm² à 2,0 N/mm², un allongement à la rupture, mesuré selon DIN 43504, S3A, de 100 à 600 %, une résistance à la traction, mesurée selon DIN 53504, S3A, de 0,2 N/mm² à 4,5 N/mm² et une tenue thermique à long terme d'au moins 260 °C.

7. Milieu filtrant selon la revendication 6, **caractérisé en ce que**
pour ce qui est de l'adhésif il s'agit d'un adhésif époxy ou d'un adhésif silicone ou d'un adhésif polyimide ou d'un adhésif à base de maléimide.

8. Milieu filtrant selon l'une quelconque des revendications 6 et 7,
**caractérisé en ce que**
le non-tissé de nanofibres est appliqué à l'aide de l'adhésif sur le côté arrivée du flux du support.

9. Milieu filtrant selon l'une quelconque des revendications 5 à 8,
**caractérisé en ce**
**qu'**il peut être obtenu selon un procédé comprenant les étapes suivantes :
a. production du non-tissé de nanofibres à partir d'une solution à l'aide d'un procédé d'électrofilage et
b. l'application et la fixation des nanofibres produites dans l'étape a. sur un support.

10. Milieu filtrant selon la revendication 9, **caractérisé en ce que**
l'étape a comprend les étapes partielles suivantes :
• préparation d'une solution de P84 à une concentration de 5 % en masse à 25 % en masse dans un solvant aprotique polaire,
• optionnelle addition d'un tensioactif à des concentrations de 0,01 ‰ en masse à 15 ‰ en masse,
• électrofilage dans un champ électrique à l'intensité de champ comprise entre 1 000 V/cm et 4 000 V/cm.

11. Milieu filtrant selon la revendication 10, **caractérisé en ce que**
la solution électrofilable de P84 dans un solvant aprotique polaire présente la composition suivante :
a. la concentration du polyimide vaut de 10 % en masse à 20 % en masse (pour cent en masse),
b. addition optionnelle d'un tensioactif à une concentration en masse de 0,75 ‰ en masse à 12 ‰ en masse (‰ en masse signifie pour mille en masse, par rapport à a.).

12. Milieu filtrant selon l'une quelconque des revendications 5 à 11,
**caractérisé en ce**
**qu'**il comprend un support à base d'un matériau choisi dans le groupe constitué par un polyimide, un aramide, les fibres de verre, le PTFE ou le poly(sulfure de phénylène) ou des associations de ceux-ci.

13. Milieu filtrant selon l'une quelconque des revendications 5 à 12,
**caractérisé en ce que**
le support est soit un tissu, soit un non-tissé et/ou
**en ce que** le support présente une perméabilité à l'air, mesurée selon ISO 9237, de 5 à 400 l/hcm², une épaisseur de 0,1 à 5 mm et un poids par unité de surface de 100 à 850 g/m².

14. Utilisation de nanofibres selon la revendication 1 ou de non-tissés de nanofibres selon l'une quelconque des revendications 2 à 4 ou de milieux filtrants selon l'une quelconque des revendications 5 à 13 pour la séparation poussière-gaz dans une filtration de gaz chauds, de préférence dans une filtration à jet pulsé.
